Europäisches Patentamt

(19) European Patent Office

Office européen des brevets

(11) Publication number : **0 450 956 B1**

(12) **EUROPEAN PATENT SPECIFICATION**

(45) Date of publication of patent specification :
27.09.95 Bulletin 95/39

(51) Int. Cl.$^6$ : **G11B 5/845**

(21) Application number : **91302974.0**

(22) Date of filing : **04.04.91**

(54) **Method of producing magnetic recording media.**

(30) Priority : **05.04.90 JP 90812/90
03.07.90 JP 176010/90**

(43) Date of publication of application :
**09.10.91 Bulletin 91/41**

(45) Publication of the grant of the patent :
**27.09.95 Bulletin 95/39**

(84) Designated Contracting States :
**DE FR GB LU NL**

(56) References cited :
**DE-A- 3 603 954
FR-A- 1 394 336
US-A- 4 447 467**

(73) Proprietor : **MATSUSHITA ELECTRIC
INDUSTRIAL CO., LTD.
1006, Kadoma
Kadoma-shi, Osaka-fu 571 (JP)**

(72) Inventor : **Suzuki, Hiroshi
476-2-3-1311, Kanou
Higashiosaka-shi, Osaka-fu 578 (JP)**
Inventor : **Nishiyama, Tousaku
5-2-302, Myokenzaka
Katano-shi, Osaka-fu 576 (JP)**
Inventor : **Hirokoh, Masaki
2-3-20-501, Morigo-cho,
Nada-ku
Kobe-shi, Hyogo-ken 657 (JP)**
Inventor : **Ohata, Tsumoru
3-9-27, Myokenhigashi
Katano-shi, Osaka-fu 576 (JP)**

(74) Representative : **Crawford, Andrew Birkby et al
A.A. THORNTON & CO.
Northumberland House
303-306 High Holborn
London WC1V 7LE (GB)**

## Description

The present invention relates to a magnetic recording medium in a tape form to be used in video and audio appliances or information related equipment. More specifically, the invention relates to a method for manufacturing a coating type magnetic recording medium possessing an excellent surface smoothness and a high squareness ratio in the longitudinal direction of tape, in order to realize a high orientation using the minimum amount of equipment and power by the most effective orientation technique.

Various recording media are presently demanded to be enhanced in the recording and reproducing characteristics in high density recording region along with the trend of high picture quality, digital processing of signals, down-sizing of appliances, and high speed processing.

In a coated magnetic recording medium, the key to improving the recording and reproducing characteristics in high frequency region is to enhance the magnetic characteristics of the medium layer and smooth the medium surface. To enhance the magnetic characteristics it is necessary to increase the magnetic intensity of recorded signals. To smooth the medium surface it is necessary to lessen the spacing loss occurring at the time of recording and reproducing by suppressing the gap between the record/play head and magnetic particles as far as possible at the medium side.

In such background, in the field of recording materials, those with higher magnetic energy are studied, and iron oxide particles improved in the coercive force by coating with Co and alloy particles high in saturated magnetization and coercive force are becoming the mainstream.

With regard to the process for applying and forming the shape of magnetic particles and magnetic layer, researches are made into the technique for raising the packing density of the magnetic layer by reducing the sizes of the magnetic particles, lowering the axial ratio, and optimizing the composition ratio of the magnetic layer, a technique for aligning the array directions of magnetic particles in the longitudinal direction of the medium to the limit by fortifying the orientation process, and a technique for optimizing the calendering conditions at the time of forming the magnetic layer and glass transition temperature of binder resin.

Along with the improvement of magnetic particles, however, as the coercive force is increased, it is necessary to intensify the external magnetic field for fixing the magnetic moment in the initial phase of orientation in the easy magnetization axis direction, or when the saturated magnetization is increased, the magnetic repulsive force among magnetic particles tends to increase when arrayed. Besides, reduction of particle size brings about decrease of distance between particles after coating or in paint state, and lowering of axial ratio leads to decrease of magnetic anisotropic energy of particles.

Thus, magnetic and morphological improvements of magnetic particles act negatively for obtaining excellent squareness ratio. In the prior art, it had been attempted to cope with the higher coercive force, lower axial ratio and stronger repulsive force among particles by early drying of the coated film to be done during orientation process as well as powerful orientation magnetic field. As such examples, various efforts have been made such as, by further advancing the known art of orientation processing while drying (Japanese Laid-open Patent No. 59-71133), orientation process is done after drying to such an extent that reaggregation does not occur magnetically, and then re-drying is now given (Japanese Laid-open Patent No. 56-35496), or magnetic orientation means is now installed in the drying process (Japanese Laid-open Patent No. 60-70532), or preliminary orientation and drying is followed by intermediate drying with simultaneous regular orientation, and then regular drying is now given (Japanese Laid-open Patent No. 60-76023).

To obtain superior surface properties, yet, a smooth and homogeneous coat film is required before calendering, and indispensable conditions are orientation process and drying process not to cause roughness of coated surface, as well as sufficient leveling after applying magnetic paints. In the conventional method, therefore, although the orientation may be improved, the coat film surface after drying is not excellent, and it is difficult to enhance the surface smoothness of the final magnetic layer.

According to German Patent DE-A-3603954, there is disclosed a method of orienting magnetic particles in the thin magnetic film of a magnetic disc in the circumferential direction of the magnetic disc by applying a horizontal magnetic field to the magnetic disc in the circumferential direction thereof immediately after the thin magnetic film has been formed on the magnetic disc said method comprising:

a first step of performing particle orientation in such a manner that a magnetic field formed between a pair of magnetic poles which have the same polarity and are disposed so as to be substantially symmetrical with respect to a magnetic disc, is applied to both surfaces of said magnetic disc; and

a second step of performing particle orientation in such a manner that a magnetic field due to a magnetic pole of a first polarity and a magnetic field due to a magnetic pole of a second polarity are alternately applied to at least one surface of said magnetic disc which has been subjected to particle orientation by said first step.

It is hence a primary object of the invention to present a method of producing a magnetic recording medium possessing a high squareness ratio without roughing the surface of a medium even by using magnetic particles of very small particle size and large saturated magnetization and coercive force, with the purpose of recording and reproducing signals in high density recording region.

According to the present invention, there is provided a method of producing a coating type magnetic recording medium in tape form comprising, in the following order:

a) a step coating a nonmagnetic substrate with a magnetic paste layer mainly composed of acicular or granular magnetic particles and a resin binder;

b) a spontaneous drying step for 2 to 7 seconds in the absence of an external magnetic field to induce levelling of the coated surface and spontaneous vaporization of the solvent;

c) a first orientation step for separating aggregated particles and consisting of the sudden application of a strong magnetic field in the longitudinal direction of the medium of an intensity at least 3 times the coercive force of the magnetic particles in said coated layer, for not more than 0.5 sec, such as to induce magnetic moments in magnetic particles in the coated layer and align them in the longitudinal direction of the medium; and

d) a second orientation step for suppressing magnetic repulsive forces among particles while arraying the magnetic particles, and comprising applying a DC magnetic field of intensity at least 1/2 the coercive force of the magnetic particles for at least 2 seconds, in the coated layer and in the longitudinal direction thereby to orient the magnetic particles in the coated layer in the longitudinal direction.

By intentionally setting the spontaneous drying step before the first orientation step, leveling of the coated surface and spontaneous volatilization of solvent are brought about, and it is effective for preventing the magnetic particles from moving within the coat film when a strong magnetic field is applied in the first orientation step. Besides, since the leveling time after forming film is sufficient, undulations of the coat film not made uniform completely in the coating step may be lessened. By these effects, roughing of the coated layer surface due to magnetic field orientation is prevented, while the coat film surface is improved. Supposing here the manufacturing conditions for obtaining a general composition of the coated magnetic recording medium, it is desired to take about 2 to 7 seconds in the spontaneous drying step. This time is to assume the nonvolatile ratio of magnetic paint of 25% or more and 45% or less at the time of coating, with the coated layer thickness after drying of 1.0 to 5.0 μm.

In the first orientation step, by applying a strong DC magnetic field in the longitudinal direction of the medium, a magnetic moment is built up on the magnetic particles facing arbitrary directions, and then orientation is effected in the direction of magnetic field with a powerful torque. The torque applied to the particles at this time acts as shearing force, which acts to effectively separate the particles from each other which have been reaggregated due to spontaneous magnetization after dispersion treatment of the paint.

The magnetic field intensity required in the first orientation step is desired to be very strong, considering the ultrafine particles of magnetic powder and tendency of higher coercive force and lower axial ratio, and it is at least desired to be 3 times or more of the coercive force of magnetic particles in powder state. The reason is that the magnetic moment cannot be excited effectively if the maximum magnetic field is less than 3 times the coercive force when the hard magnetization axis of magnetic particles is facing the direction of magnetic field in the initial state before orientation.

The time of applying the strong magnetic field in the first orientation step should not be longer than required, and it is desired to be within 0.5 second when the magnetic field intensity becomes more than 3 times the coercive force of magnetic particles. If longer, the magnetic coated layer begins to be fluid, and the smoothness and orientation uniformity of the coated layer obtained by making use of leveling performance are sacrificed, and the surface smoothness after drying is impaired.

In the second orientation step, by applying a DC magnetic field within the coated layer and in the longitudinal direction, it is intended to suppress the magnetic repulsive force among magnetic particles about to face the magnetic direction as the magnetic moment is excited in the first orientation step, and array precisely in the longitudinal direction of the medium. As the degree of array of magnetic particles is enhanced, the magnetic repulsive force increases, and therefore the minimum magnetic field intensity is desired to be 1/2 or more of the coercive force of magnetic particles in powder state and last for at least 2 seconds.

As the external magnetic filed to be applied in the second orientation step, considering the constant of magnetic field intensity or levelness of magnetic field, it is most desired to make use of the horizontal magnetic field obtained by passing a stable DC current in the solenoid coil.

Besides, from the end of first orientation step till the end of the second orientation step, plural air nozzles are installed, and hot air set at temperature and flow rate not to rough the surface of the coated layer by drying is blown to the coated surface, and the repulsive force among magnetic particles is canceled by the viscosity rise of the coated layer, so that the orientation may be maintained more effectively.

Owing to such effects, in the invention, it is possible to obtain magnetic recording media excellent in both squareness ratio in the longitudinal direction and surface smoothness that could not be realized in the conventional method by using magnetic particles of high coercive force and low axial ratio. The read/write characteristics of the media obtained by the invention can exhibit a high record/ playback performance in high density recording region.

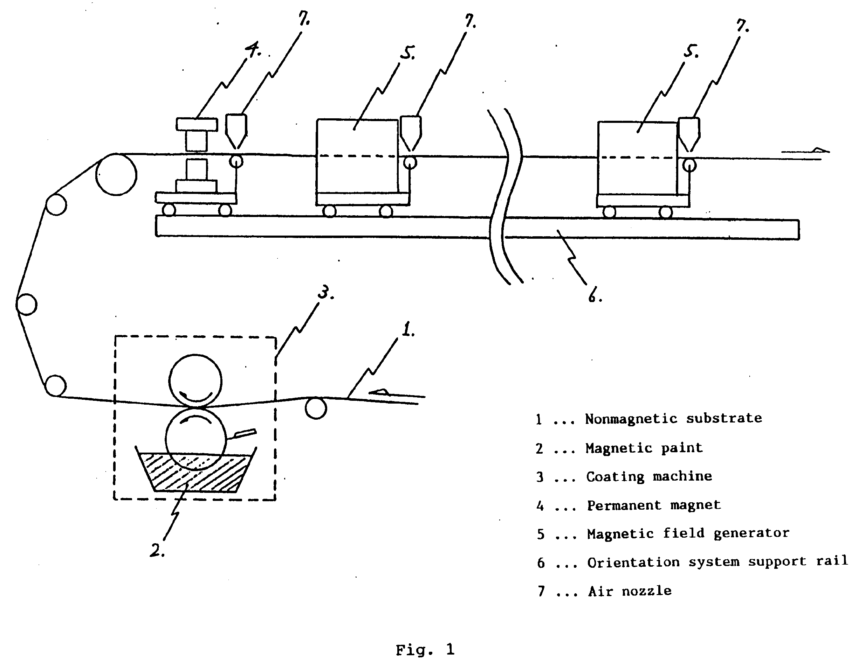

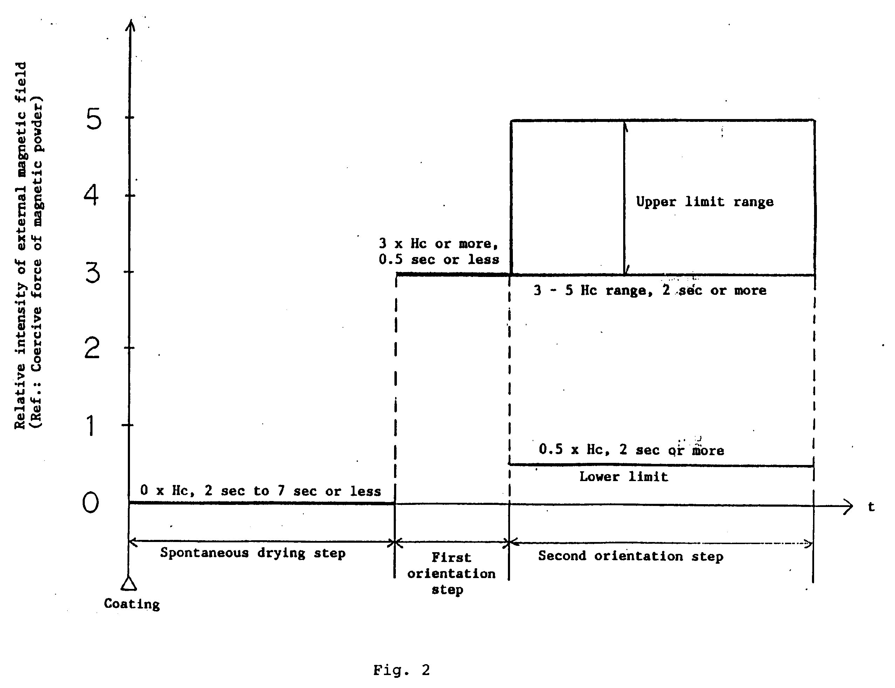

Fig. 1 is a structural diagram showing manufacturing equipment in an embodiment of the invention, and Fig. 2 is a chart relating to a method for applying an external magnetic field in a preferred embodiment of the invention.

Fig. 1 shows manufacturing equipment of magnetic tape in an embodiment of the invention. Numeral 1 denotes a nonmagnetic substrate. Numeral 2 denotes magnetic paint. Numeral 3 is a coating machine for applying magnetic paint on the nonmagnetic substrate. Numeral 4 is a permanent magnet unit. Numeral 5 is a magnetic field generator made by solenoid coil. Numeral 6 denotes orientation system support rails for supporting the permanent magnet until 4 and magnetic field generator 5. Numeral 7 denotes an air nozzle.

The nonmagnetic substrate 1 is made of paper, glass, aluminum, other nonmagnetic metal, ceramics, etc. and in particular preferred materials are polyesters such as polyethylene terephthalate and polyethylene-2,6-naphthalate, polyolefins such as polyethylene and polypropylene, cellulose derivatives such as cellulose acetate, cellulose diacetate, cellulose acetate butylate and cellulose acetate propionate, vinyl resins such as polyvinyl chloride and polyvinylidene chloride, and plastic films such as polycarbonate, polyimide, polyetherimide and polyimide amide, which are excellent in surface property, durability and flexibility and are generally used in tape-shaped media. In the embodiment, polyethylene terephthalate film is used which is used in high definition VTR and is known to be superior in surface smoothness.

The magnetic paint 2 is prepared by kneading magnetic powder, binder, nonmagnetic solid fine particles, and others together with a solvent. The magnetic powder is mainly composed of magnetic materials such as acicular gamma iron oxide ($\gamma$-Fe$_2$O$_3$), chromium oxide (CrO$_2$), acicular metal powder (Fe), iron carbide (FeC), iron nitride (FeN), ferrite, and barium ferrite, and other elements may be added as required. As the binder, thermoplastic resins are used, for example, polyrethane, vinyl chloride-vinyl acetate copolymer, cellulose derivative, urethane elastomer, and nitrocellulose polyamide resin. Nonmagnetic solid fine particles are added mainly for enhancing the conductivity, polishing property, lubricity, and durability, and specifically fused alumina, silicon carbide, chromium oxide, diamond, corundum, graphite, molybdenum disulfide, tungsten disulfide, carbon black and others are used. Examples of solvent include acetone, methylethylketone, methylisobutylketone, cyclohexane and other ketones; methanol, ethanol, propanol, butanol and other alcohols; methyl acetate, ethyl acetate, butyl acetate and other acetic acids; and benzene, toluene, xylene and other aromatic hydrocarbons are used either alone or in mixed state. Besides, as dispersant, lubricant and stabilizer, myristic acid, stearic acid, oleic acid, linolic acid, linolenic acid and other organic agents of low molecular weight may be added. These materials are added, generally to 100 parts by weight of magnetic powder, by 16 to 30 parts by weight of binder, and 1 to 10 parts by weight of other additives, and the nonvolatile content of the dispersed paint is adjusted to be 25% to 80%, and the magnetic paint is obtained in the process of kneading and dispersing. As the method of kneading and dispersing, the ball mill or sand mill may be used, and many other general methods are mentioned in "Paint Flow and Pigment Dispersion" by T.C. Patton, and these methods may be employed for kneading and dispersing.

In the embodiment, the paint using alloy magnetic powder is used in forming the magnetic layer.

The coating machine 3 is generally a gravure coater, but other machines may be also used, for example, air doctor coater, blade coater, air knife coater, kiss coater and die coater mentioned in "Coating Engineering" published by Asakura Shoten in 1971. In the embodiment, the gravure coater is used to apply the magnetic paint on the non-magnetic substrate. Afterwards, according to the producing method of the invention, orientation is effected, which is followed by drying, calendering and curing.

The permanent magnet unit 4 is composed of two permanent magnets with the same poles confronting each other. As permanent magnets, general manganese bismuth magnet, manganese aluminum magnet, ferrite magnet, and samarium cobalt, yttrium cobalt and cerium cobalt mainly composed of rare earth elements may be used. In the embodiment, permanent magnets of samarium cobalt known to be high in the spontaneous magnetization are used, and the maximum horizontal magnetic field of 8,000 Gauss is achieved.

The magnetic field generator 5 is a solenoidal coil having the central opening shaped in a rectangular form in order to pass the nonmagnetic substrate, and it is already known in the USP 3,256,112. The generator furnished with cooling unit is widely used so as not to heat by long-term energization while generating high magnetic field. Owing to the rectangular opening in the magnetic field generator, a horizontal and less gradient magnetic field is obtained in the longitudinal direction on the nonmagnetic substrate which passes through the center. The magnetic field intensity is controlled by the current supplied to the magnetic field generator.

The orientation system support rails 6 are installed horizontal to the traveling surface of the nonmagnetic substrate, and by moving the permanent magnet unit 4 and the magnetic field generator 5 on the rails, the time from the coating head to orientation process, and the intensity of the magnetic field between the magnets can be adjusted. The magnetic field generator used in the embodiment is capable of generating a maximum magnetic field of 8,000 Gauss, and it is designed to put up to 10 units on the support rails. Such multi-stage magnetic field generator has been disclosed, for example, in the Japanese laid-open Patent No. 56-119938.

The air nozzle 7 is installed behind each orientation magnet, and the hot air from the heating air supplier is blown onto the magnetic layer applied on the nonmagnetic substrate. By controlling from the heating air supplier, the temperature and flow rate of the hot air blown out from the air nozzle can be adjusted.

Example 1

As hard-to-orient magnetic powder, acicular metal magnetic powder with coercive force of 1,570 Oe and axial ratio of 9.5 was used. Properties of magnetic powder are shown in Table 1, and the painting formulation when dispersed in organic binders is shown in Table 2. On the basis of the painting formulation shown in Table 2, the magnetic powder was sufficiently kneaded and dispersed by means of pressurized kneader and sand mill, and magnetic paint with the nonvolatile ratio of 35 wt.% was obtained.

The painting condition was set so that the dry thickness would be 2.9 $\mu$m on a 10 $\mu$m thick PET, and orientation was treated as shown in Table 3, which was followed by drying and calendering.

The following operation was conducted in order to obtain the orientation treating condition in Table 3 by employing the orientation equipment in the embodiment.

● Spontaneous drying time

Adjusted by moving the setting position of the permanent magnet unit as the first stage of the orientation system back and forth on the supporting rails.

● Maximum magnetic field strength of first orientation step

Adjusted by the distance between same confronting poles of permanent magnets.

● Minimum magnetic field strength of second orientation step

The magnetic field intensity between magnets was controlled by the current applied to the magnetic field generator.

● Application time of second orientation step

The magnetic field length of the entire orientation process was controlled by applying current to 10 magnetic field generators, from the one closest to the coating machine.

In succession, by 24-hour hardening treatment at 60°C, a back coat layer mainly composed of carbon black was applied in a thickness of 0.6 $\mu$m, and sample tapes A, B, C, D, E and F were prepared.

To compare with these sample tapes, other samples were oriented as shown in Table 4. These reference samples were prepared in the same material composition, magnetic paint formulation and coating method as in the embodiment.

Thus prepared samples were slit in a tape form, and the squareness ratio (Br/Bm) of tape in the longitudinal direction of the medium and surface smoothness of magnetic layer were evaluated.

The results of evaluation are sequentially explained below.

Table 5 summarizes the squareness ratio of tape in the longitudinal direction of the medium and mean surface roughness of samples of embodiments and references in terms of the orientation condition. The squareness ratio was measured by VMS (vibrating sample magnetometer) apparatus by sweeping magnetic field of 10 k Oe, and the mean surface roughness was measured by optical interference type contact-free three-dimensional surface roughness meter.

It is known from Table 5 that the greatest effect is achieved when the orientation conditions satisfy the following requirements:

(1) spontaneous drying time: 2.0 sec to 7.0 sec
(2) magnetic field application time in first orientation step: within 0.5 sec when more than 3 times the magnetic powder coercive force
(3) minimum magnetic field intensity in second orientation step: 1/2 or more of magnetic powder coercive force
(4) application time in second orientation step: 2 sec or more and a high squareness ratio of 0.86 or more in the longitudinal direction of the medium and a superior surface smoothness of about 6 nm of mean surface roughness are both realized.

In samples G to L where high orientation and superior smoothness are not established both, the following reasons are main factors.

First in sample G, since the spontaneous drying time is short, disorder of orientation occurs after the orientation process, and in sample H with a longer spontaneous drying time orientation is fixed before completely arrayed in the orientation process.

In sample I, since the maximum magnetic field intensity in the first orientation step is low, orientation is not enough in the magnetic particles with low axial ratio as employed in this embodiment.

To the contrary, in sample J with a strong maximum magnetic field intensity in the first orientation step, the time when exceeding 3 times the magnetic powder coercive force is more than 0.5 sec, a very high squareness ratio is obtained, while the magnetic layer is fluidized, which results in poor surface roughness.

In sample K, since the minimum magnetic field intensity in the second orientation step is too low, disorder of orientation of magnetic particles in this section cannot be suppressed sufficiently, and the order of magnetic particles is finally lowered. Likewise, in sample L, since the application time in the second orientation step is short, disorder of orientation has occurred after orientation process.

Thus, when magnetic particles of small axial ratio hard to orient are used, in the orientation method of the reference example, high order of magnetic particles cannot be obtained because the condition for orientation processing is out of the delicate setting for orienting at high precision. Or if a high degree of orientation is achieved, the surface of magnetic layer is roughened, which results in sacrifice of read/write characteristics in the high recording density region.

By contrast, in the embodiment, since the optimum method of orientation for obtaining a high order of magnetic particles is employed, while maintaining the surface roughness by the invention, the tape characteristics obviously superior to those of references are obtained.

## Table 1

|  | Acicular metal magnetic powder |
|---|---|
| BET specific surface area $[m^2/g]$ | 52 |
| Coercive force (Hc) [Oe] | 1570 |
| Saturated magnetism (Is) [emu] | 126 |
| Axial ratio (length/width) | 9.5 |

## Table 2

| | |
|---|---|
| Magnetic powder | 100 parts by weight |
| Resin binder | 20 parts by weight |
| (Vinyl chloride | 10 parts by weight) |
| (Polyurethane | 10 parts by weight) |
| Aluminum oxide | 7 parts by weight |
| Carbon | 3 parts by weight |
| Lubricant | 4 parts by weight |
| (Myristic acid | 2 parts by weight) |
| (Stearic acid | 1 part  by weight) |
| (n-Butyl stearate | 1 part  by weight) |
| Hardener | 5 parts by weight |

The solvent formulation was adjusted to a mixing ratio of methylethylketone:toluene:cyclohexane = 3:3:1.

Table 3

| | Orientation condition when preparing samples | | | |
|---|---|---|---|---|
| | Non-orientation process | First orientation process | Second orientation process | |
| | Non-orientation time: T | Time of 3 Hc or more | Min magnetic field: H min | Application time: t |
| A | 2.0 sec | 0.1 sec(MAX:3.2Hc) | .51Hc:800 Gauss | 2.0 sec. |
| B | 5.0 sec | 0.1 sec(MAX:3.2Hc) | .51Hc:800 Gauss | 2.0 sec. |
| C | 7.0 sec | 0.1 sec(MAX:3.2Hc) | .51Hc:800 Gauss | 2.0 sec. |
| D | 5.0 sec | 0.3 sec(MAX:4.8Hc) | .51Hc:800 Gauss | 2.0 sec. |
| E | 5.0 sec | 0.1 sec(MAX:3.2Hc) | 1.0Hc:1,600 Gauss | 2.0 sec. |
| F | 5.0 sec | 0.1 sec(MAX:3.2Hc) | .51Hc:800 Gauss | 10.0 sec. |

Table 4

| | Orientation condition | | | |
|---|---|---|---|---|
| | Non-orientation process | First orientation process | Second orientation process | |
| | Non-orientation time: T | Time of 3 Hc or more | Min magnetic field: H min | Application time: t |
| G | 1.5 sec | 0.1 sec(MAX:3.2Hc) | .51Hc:800 Gauss | 2.0 sec |
| H | 7.5 sec | 0.1 sec(MAX:3.2Hc) | .51Hc:800 Gauss | 2.0 sec |
| I | 5.0 sec | 0.0 sec(MAX:2.9Hc) | .51Hc:800 Gauss | 2.0 sec |
| J | 5.0 sec | 0.6 sec(MAX:5.1Hc) | .51Hc:800 Gauss | 2.0 sec |
| K | 5.0 sec | 0.1 sec(MAX:3.2Hc) | 0.3Hc:470 Gauss | 2.0 sec |
| L | 5.0 sec | 0.1 sec(MAX:3.2Hc) | .51Hc:800 Gauss | Approx. 1.5 sec |

## Table 5

| | Sample | Setting of parameter | Other orientation condition | Squareness ratio Br/Bm | Surface roughness R ms (nm) |
|---|---|---|---|---|---|
| Non-orientation time T | G | Approx. 1.5 sec | . Time of 3Hc or more = 0.1 sec(MAX: 3.2Hc) . Min magnetic field: H min = 0.5Hc: 800 Gauss . Application time: t = 2.0 sec | 0.74 | 7.13 |
| | A | 2.0 sec | | 0.87 | 6.34 |
| | B | 5.0 sec | | 0.89 | 6.21 |
| | C | 7.0 sec | | 0.88 | 6.27 |
| | H | Approx. 7.5 sec | | 0.81 | 6.51 |
| First orientation process | I | 0.0 sec(MAX:2.9Hc) | . Non-orientation time = 5.0 sec . Min magnetic field: H min = 0.5Hc: 800 Gauss . Application time: t = 2.0 sec | 0.84 | 6.19 |
| | B | 0.1 sec(MAX:3.2Hc) | | 0.89 | 6.21 |
| | D | 0.3 sec(MAX:4.8Hc) | | 0.91 | 6.54 |
| | J | 0.6 sec(MAX:5.1Hc) | | 0.91 | 8.69 |
| Min magnetic field H | K | 0.3Hc: 470 Gauss | . Non-orientation time = 5.0 sec = Time of 3Hc or more = 0.1 sec(MAX: 3.2Hc) . Application time: t = 2.0 sec | 0.76 | 6.32 |
| | B | .51Hc: 800 Gauss | | 0.89 | 6.21 |
| | E | 1.0Hc: 800 Gauss | | 0.91 | 6.14 |
| Application time t | L | Approx. 1.5 sec | . Non-orientation time = 5.0 sec . Max magnetic field: H max = 3.2Hc: 5000 Gauss . Min magnetic field: H min = 0.5Hc: 800 Gauss | 0.84 | 6.31 |
| | B | 2.0 sec | | 0.89 | 6.21 |
| | F | 10.0 sec | | 0.90 | 6.26 |

Example 2

In order to evaluate the effect of air nozzle, the hot air blow condition from the air nozzle installed behind each magnet unit was studied in the orientation condition of sample B. Setting the temperature and air flow of the air nozzle as shown in Table 6, samples M to T were prepared. In each condition, the air nozzle interval was identical.

In these samples, the squareness ratio in the longitudinal direction of the medium and surface roughness were measured same as in Example 1, and the results are shown in Table 6, together with the blowing conditions.

As known from Table 6, by blowing a proper hot air to the coated layer from the air nozzle installed behind each magnet unit, the effect of the invention may be further enhanced.

As the setting of the air nozzle, from these experimental results, it is found that the greatest effect is obtained at the air flow rate of 7 to 25 m³/min at temperature of 50 to 100°C at the nozzle outlet. If the temperature is lower or air flow is smaller, effect is not observed, or at the higher temperature or larger air flow side, the surface of the coated layer is roughed.

Example 3

By contrast to sample N in the embodiment showing the maximum effect, the following comparison samples were prepared.

In the oven closest to the coating head of the standard coating machine used generally, six magnetic field generators of the same capacity as used in Examples 1 and 2 were installed, and orientation was performed while drying powerfully in the magnetic field at the intensity of 6k Gauss, which was comparison sample 1.

A hot air blower was installed between the same coating head as in the same machine in comparison sample 1 and the first oven, and a hot air at 80°C was blown to dry preliminarily, and orientation was performed at 6k Gauss while drying usually, which was comparison sample 2.

The results of squareness ratio and surface roughness of these comparison sample and sample N are shown in Table 7.

In comparison sample 1, since an abrupt drying condition is required more than usual, although the orientation is similar to the embodiment, the surface roughness is great, and excellent surface smoothness as in the embodiment was not achieved.

In comparison sample 2, the surface property and orientation are both balanced in the air flow, but both orientation and surface roughness were not superior as in the embodiment.

As shown in the embodiment herein, even in the hard-to-orient magnetic powder with short axial ratio and large coercive force, by applying the invention, superior orientation performance and surface smoothness not achieved in the prior art can be realized.

In this embodiment, as the orientation system, rare earth permanent magnet and magnetic field generator were combined, but this is not limitative, and only the permanent magnets or only magnetic field generators may be used as far as the orientation method of the invention can be realized, and the magnetic field generator is not limited to solenoidal type alone.

The constituent materials of the magnetic layer, and the technique for dispersing in organic binders and forming tape are not limitative, and the effects of the invention will be obtained by using any other materials or methods as far as the materials, paint formulation method or painting method are capable of producing coated magnetic tapes.

## Table 6

| Sample | Air blow condition | | Tape characteristics | |
|--------|---------------------|---------------------|----------------------|--------------------------------|
|        | Temperature (°C) | Air flow rate (m /min) | Squareness ratio Br/Bm | Surface roughness R ms (nm) |
| B | - | - | 0.89 | 6.21 |
| M | 40 | 15 | 0.89 | 6.21 |
| N | 80 | 15 | 0.91 | 6.25 |
| O | 120 | 15 | 0.91 | 8.23 |
| P | 80 | 5 | 0.89 | 6.22 |
| Q | 80 | 10 | 0.90 | 6.23 |
| R | 80 | 20 | 0.91 | 6.28 |
| S | 80 | 25 | 0.91 | 6.59 |
| T | 80 | 30 | 0.91 | 8.53 |

## Table 7

| Sample | | Squareness ratio (Br/Bm) | Surface roughness (nm) |
|--------|---|---------------------------|------------------------|
| Sample N | | 0.91 | 6.25 |
| Comparison sample 1 | | 0.90 | 8.43 |
| Comparison sample 2 | Air flow; Small | 0.81 | 6.42 |
| | Medium | 0.86 | 7.13 |
| | Large | 0.83 | 7.56 |

## Claims

1.  A method of producing a coating type magnetic recording medium in tape form comprising, in the following order:

    a) a step coating a nonmagnetic substrate (1) with a magnetic paste (2) layer mainly composed of acicular or granular magnetic particles and a resin binder;

b) a spontaneous drying step for 2 to 7 seconds in the absence of an external magnetic field to induce levelling of the coated surface and spontaneous vaporization of the solvent;

c) a first orientation step for separating aggregated particles and consisting of the sudden application of a strong magnetic field in the longitudinal direction of the medium of an intensity at least 3 times the coercive force of the magnetic particles in said coated layer, for not more than 0.5 sec, such as to induce magnetic moments in magnetic particles in the coated layer and align them in the longitudinal direction of the medium; and

d) a second orientation step for suppressing magnetic repulsive forces among particles while arraying the magnetic particles, and comprising applying a DC magnetic field of intensity at least 1/2 the coercive force of the magnetic particles for at least 2 seconds, in the coated layer and in the longitudinal direction thereby to orient the magnetic particles in the coated layer in the longitudinal direction.

2. A method according to claim 1, wherein plural air nozzles (7) are installed from the end of the first orientation step till the end of the second orientation step, and the viscosity of the coated layer is raised by blowing hot air to the coated surface at a temperature and a flow rate which do not rougher the coated surface by drying.

3. A method according to claim 1 or 2, wherein the maximum magnetic field intensity applied during the second orientation step is 3 times to 5 times that of the coercive force of the magnetic particles.

4. A method according to claim 1, 2 or 3, wherein three to ten air nozzles (7) are installed from the end of the first orientation step till the end of the second orientation step, the temperature of each air nozzle being 50 degrees centigrade to 100 degrees centigrade, and the air flow rate of each air nozzle being 7 to 25 $m^3$/min.

5. A method according to any of the preceding claims, wherein the forming condition of the magnetic layer is a thickness of the dried layer of 1.0 $\mu m$ to 5.0 $\mu m$, and the non-volatile ratio of the magnetic paint at coating is 25% to 45%.

6. A method according to any of the preceding claims, wherein the magnetic paste (2) layer coated on the nonmagnetic substrate (1) is mainly composed of ferromagnetic alloy particles with an axial ratio of 5 to 14 or less, and a resin binder.

**Patentansprüche**

1. Verfahren zum Erzeugen eines Magnetaufzeichnungsmediums vom Beschichtungstyp in Bandform, welches in der nachfolgenden Reihenfolge umfaßt:

a) einen Schritt des Beschichtens eines nichtmagnetischen Substrats (1) mit einer magnetischen Pastenschicht (2), die hauptsächlich zusammengesetzt ist aus nadelförmigen oder körnigen Magnetteilchen und einem Harzbinder;

b) einen Spontan-Trockenschritt von 2 bis 7 s in Abwesenheit eines externen Magnetfeldes, um eine Einebnung der beschichteten Fläche und spontane Verdampfung des Lösungsmittels einzuleiten;

c) einen ersten Ausrichtungsschritt zum Trennen verklumpter Partikel, der besteht aus dem plötzlichen Anlegen eines starken Magnetfeldes in der Längsrichtung des Mediums, mit einer Stärke von mindestens dem Dreifachen der Koerzitivkraft der Magnetpartikel in der aufgetragenen Schicht während nicht mehr als 0,5 s, um so Magnetmomente in Magnetteilchen in der aufgetragenen Schicht zu induzieren und sie in Längsrichtung des Mediums auszurichten; und

d) einen zweiten Ausrichtungsschritt zum Unterdrücken magnetischer Abstoßungskräfte zwischen den Teilchen während des Anordnens der Magnetteilchen, der besteht aus dem Anlegen eines Gleich-Magnetfeldes mit einer Intensität von mindestens der Hälfte der Koerzitivkraft der Magnetteilchen während mindestens 2 s, in der aufgetragenen Schicht und in Längsrichtung, um dadurch die Magnetteilchen in der aufgetragenen Schicht in der Längsrichtung auszurichten.

2. Verfahren nach Anspruch 1, bei dem eine Vielzahl von Luftdüsen (7) vom Ende des ersten Orientierungsschrittes bis zum Ende des zweiten Orientierungsschrittes eingesetzt ist und die Viskosität der aufgetragenen Schicht angehoben wird durch Aufblasen warmer Luft auf die aufgetragene Fläche mit einer Temperatur und einer Strömungsrate, welche die aufgetragene Oberfläche nicht durch Trocknen anrauhen.

3. Verfahren nach Anspruch 1 oder 2, bei dem die maximale während des zweiten Orientierungsschrittes angelegte Magnetfeldstärke das Drei- bis Fünffache der Koerzitivkraft der Magnetteilchen beträgt.

4. Verfahren nach Anspruch 1, 2 oder 3, bei dem drei bis 10 Luftdüsen (7) vom Ende des ersten Ausrichtungsschrittes bis zum Ende des zweiten Ausrichtungsschrittes eingesetzt sind, die Temperatur bei jeder Luftdüse 30°C bis 100°C beträgt und die Luftströmungsrate jeder Düse 7 bis 25 m³/min beträgt.

5. Verfahren nach einem der vorangehenden Ansprüche, bei dem der Ausformungszustand der Magnetschicht eine Dicke der getrockneten Schicht von 1,0 μm bis 5,0 μm ist, und das Nichtflüchtigkeitsverhältnis der magnetischen Auftragsmasse beim Beschichten 25% bis 45% beträgt.

6. Verfahren nach einem der vorangehenden Ansprüche, bei dem die auf das nichtmagnetische Substrat (1) aufgetragene Magnetpasten-(2)-Schicht hauptsächlich aus ferromagnetischen Legierungsteilchen mit einem Achsenverhältnis von 5 bis höchstens 14 und einem Harzbinder zusammengesetzt ist.


**Revendications**

1. Procédé de production d'un support d'enregistrement magnétique du type à enduction sous forme de bande comprenant, dans l'ordre suivant :
   a) une étape d'enduction d'un substrat non magnétique (1) avec une couche de pâte magnétique (2) composée de particules magnétiques aciculaires ou granulaires et un liant de résine ;
   b) une étape de séchage spontané pendant 2 à 7 secondes en l'absence de champ magnétique externe pour induire un nivellement de la surface enduite et une évaporation spontanée du solvant ;
   c) une première étape d'orientation pour séparer des particules agrégées et se composant de l'application soudaine d'un champ magnétique puissant dans la direction longitudinale du support d'une intensité d'au moins trois fois la force coercitive des particules magnétiques dans ladite couche enduite, pendant pas plus de 0,5 seconde, de façon à induire des moments magnétiques dans des particules magnétiques dans la couche enduite et de les aligner dans la direction longitudinale du support ; et
   d) une seconde étape d'orientation pour supprimer des forces répulsives magnétiques parmi des particules tout en disposant les particules magnétiques, et se composant de l'application d'un champ magnétique à courant continu d'intensité au moins de la moitié de la force coercitive des particules magnétiques pendant au moins 2 secondes, dans la couche enduite et dans la direction longitudinale de façon à orienter les particules magnétiques dans la couche enduite dans la direction longitudinale.

2. Procédé selon la revendication 1, dans lequel plusieurs buses d'air (7) sont installées depuis le début de la première étape d'orientation jusqu'à la fin de la seconde étape d'orientation, et la viscosité de la couche enduite est élevée en soufflant de l'air chaud sur la surface enduite à une température et à un débit qui ne rend pas rugueuse la surface enduite en séchant.

3. Procédé selon la revendication 1 ou 2, dans lequel l'intensité du champ magnétique maximum appliqué pendant la seconde étape d'orientation est 3 à 5 fois celle de la force coercitive des particules magnétiques.

4. Procédé selon la revendication 1, 2 ou 3, dans lequel trois à dix buses d'air (7) sont installées à partir du début de la première étape d'orientation jusqu'à la fin de la seconde étape d'orientation, la température de chaque buse d'air étant de 50 degrés centigrade à 100 degrés centigrade, et le débit d'air de chaque buse d'air étant de 7 à 25 m³/min.

5. Procédé selon l'une quelconque des revendications précédentes, dans lequel la condition de formation de la couche magnétique est une épaisseur de la couche séchée de 1,0 μm à 5,0 μm, et le rapport non volatile de peinture magnétique sur l'enduit est de 25% à 45%.

6. Procédé selon l'une quelconque des revendications précédentes, dans lequel la couche de pâte magnétique (2) enduite sur le substrat non magnétique (1) est principalement composée de particules d'alliage ferromagnétique avec un rapport axial de 5 à 14 ou moins, et un liant de résine.

Fig. 1

1 ... Nonmagnetic substrate

2 ... Magnetic paint

3 ... Coating machine

4 ... Permanent magnet

5 ... Magnetic field generator

6 ... Orientation system support rail

7 ... Air nozzle

EP 0 450 956 B1

Relative intensity of external magnetic field
(Ref.: Coercive force of magnetic powder)

5

4

3

2

1

0

Upper limit range

3 x Hc or more,
0.5 sec or less

3 - 5 Hc range, 2 sec or more

0.5 x Hc, 2 sec or more

Lower limit

0 x Hc, 2 sec to 7 sec or less

t

Spontaneous drying step

First
orientation
step

Second orientation step

Coating

Fig. 2